# EUROPEAN PATENT APPLICATION

(11) **EP 4 517 384 A1**
(43) Date of publication of application: **05.03.2025**
(21) Application number: 24196951.8
(22) Date of filing: 28.08.2024
(51) Int. Cl.: G01S 19/14, G01S 19/39

(54) **METHODS AND APPARATUS FOR EVALUATING LOCATION MEASUREMENTS OF UNDERGROUND OBJECTS**

(30) Priority: 28.08.2023 US 202363579284 P
(71) Applicant: Radiodetection Ltd., Bristol BS14 0AF (GB)
(72) Inventor: IACCARINO, Alberto, Bristol (GB)
(74) Representative: Viering, Jentschura & Partner mbB Patent- und Rechtsanwälte

(57) **Abstract**

An underground utility asset detection system including a locator configured to detect underground signals, a GNSS receiver, and a mobile device in communication with the locator and the GNSS receiver is provided. The mobile device includes a processor configured to receive a set of geospatial location data from the GNSS receiver, receive one or more accuracy values associated with the set of geospatial location data, access one or more user-selectable threshold values, and compare the one or more accuracy values to the one or more user-selectable threshold values to determine an accuracy score. The mobile device is configured to display one or more of an accuracy status icon or a GNSS status icon having a visual indicator that corresponds to the accuracy score.

## Description

### TECHNOLOGY FIELD

This disclosure generally relates to buried asset detection. More specifically, the disclosure relates to a method and apparatus to facilitate collecting and evaluating geospatial location measurements associated with underground assets.

### BACKGROUND

Underground utility asset detection equipment utilizes electromagnetic induction, ultrasonic signals, or ground-penetrating radar to locate buried pipes, cables, storage tanks, etc. While the location of underground objects can be marked in situ with paint or flags, it can be difficult to record these locations accurately and confidently on a reference map or within a coordinate system.

Inaccurate geospatial location measurements can create risks because underground objects may be damaged by neighboring dig projects, potentially resulting in water leaks, gas leaks, sewage leaks, exposed electrical conductors, etc.

### SUMMARY

Underground utility asset detection equipment may use one or more global navigation satellite systems (GNSS) to measure and record locations of underground objects according to a coordinate system, which may then be plotted and displayed on a map. However, an undesirably high portion of these geospatial location measurements lack precision, or confidence in the precision of the measurement is low when the measurement is taken.

As such, there is a need for improved underground utility asset detection equipment that is designed to precisely measure locations and provide verifiable confidence that the geospatial location measurements are accurate.

Some embodiments provide an underground utility asset detection system including a locator configured to detect underground signals, a GNSS receiver, and a mobile device in communication with the locator and the GNSS receiver. The mobile device includes a processor configured to receive a set of geospatial location data from the GNSS receiver, receive one or more accuracy values associated with the set of geospatial location data, access one or more user-selectable threshold values, and compare the one or more accuracy values to the one or more user-selectable threshold values to determine an accuracy score. The mobile device is configured to display one or more of an accuracy status icon or a GNSS status icon having a visual indicator that corresponds to the accuracy score.

In some forms, the one or more accuracy values include one or more of a dilution of precision (DOP) value, a number of satellites tracked by the GNSS receiver, a horizontal accuracy value, a vertical accuracy value, and a speed value. The one or more user-selectable threshold values can include one or more of a DOP threshold value, a number of satellites tracked threshold value, a horizontal accuracy threshold value, a vertical accuracy threshold value, and a speed threshold value. The DOP threshold value can include one or more of a horizontal DOP threshold value, a vertical DOP threshold value, a time DOP threshold value, a positional DOP threshold value, and a geometric DOP threshold value. The mobile device can be configured to store the set of geospatial location data in a memory of the mobile device along with an underground measurement taken by the locator only when one or more of the user-selectable threshold values are satisfied by the one or more accuracy values. The one or more user-selectable threshold values can be input by a user via a user interface, and the user interface can be one of a locator display on the locator or a mobile device display on the mobile device. A user can select, via a user interface of the mobile device, the GNSS receiver as being one of an external GNSS receiver, a locator GNSS receiver within the locator, or a mobile device GNSS receiver within the mobile device.

Some embodiments provide an underground utility asset detection system, including a GNSS receiver and a mobile device in communication with the GNSS receiver. The mobile device includes a user interface and a processor. The processor is configured to receive one or more of a dilution of precision (DOP) value, a number of satellites tracked by the GNSS receiver, a horizontal accuracy value, a vertical accuracy value, and a speed value from the GNSS receiver with respect to a set of geospatial location data, and determine whether one or more of the DOP value, the number of satellites tracked, the horizontal accuracy value, the vertical accuracy value, and the speed value satisfy a plurality of user-defined threshold values, and generate an accuracy score. The user interface is configured to display a visual indicator corresponding to the accuracy score.

In some forms, the plurality of user-defined threshold values include one or more of a DOP threshold value, a number of satellites tracked threshold value, a horizontal accuracy threshold value, a vertical accuracy threshold value, or a speed threshold value. The user interface can display an accuracy status icon or a GNSS status icon in a predetermined color when all of the plurality of user-defined threshold values are satisfied. The user interface can display a predetermined pattern or an animation when all of the plurality of user-defined threshold values are satisfied. The user interface can display a predetermined color when none of the plurality of user-defined threshold values are satisfied. The user interface can include an accuracy status icon, and the accuracy status icon can display one or more of the DOP value, the number of satellites tracked, a satellite constellations tracked value, the vertical accuracy value, or the horizontal accuracy value. The mobile device can be configured to provide one or more of a tactile vibration or an audible warning based on the accuracy score. The mobile device and the GNSS receiver can be integrally formed with a locator configured to detect underground signals.

Some embodiments provide a method of detecting an underground utility asset including the steps of providing a locator, a GNSS receiver, and a mobile device in communication with the locator and the GNSS receiver, receiving a set of geospatial location data, receiving an accuracy value corresponding to the set of geospatial location data, the accuracy value including one or more of a dilution of precision (DOP) value, a number of satellites tracked, a horizontal accuracy value, a vertical accuracy value, and a speed value, determining an accuracy score based on the accuracy value, and displaying, on the mobile device, one or more of an accuracy status icon or a GNSS status icon having a visual indicator that corresponds to the accuracy score.

In some embodiments, the method includes receiving one or more of a DOP threshold value, a number of satellites tracked threshold value, a horizontal accuracy threshold value, a vertical accuracy threshold value, and a speed threshold value. In some forms, when a threshold number of the accuracy values are within a user-specified range, the visual indicator is displayed in a first color. In some embodiments, the method includes receiving an underground measurement point, and storing the accuracy score, the underground measurement point, and the set of geospatial location data as a survey data set. In some forms, the method includes automatically disposing of the set of geospatial location data when the accuracy value does not satisfy one or more user-defined thresholds.

### BRIEF DESCRIPTION OF THE DRAWINGS

FIG. 1 illustrates underground utility asset detection equipment operating in accordance with the teachings of this disclosure in an environment;
FIG. 2 is a front elevational view of a locator device according to an embodiment;
FIG. 3 is a side plan view of the locator device of FIG. 2;
FIG. 4 is a block diagram of various electronic components associated with the underground utility asset detection equipment of FIG. 1;
FIG. 5 is a detailed block diagram of a memory component of FIG. 4;
FIG. 6 is a detailed block diagram of a location measurement analyzer of FIG. 4;
FIG. 7 is a first logic table accessible by the electronic components of the underground utility asset detection equipment of FIG. 4;
FIG. 8 is a second logic table accessible by the electronic components of the underground utility asset detection equipment of FIG. 4;
FIG. 9 is a third logic table accessible by the electronic components of the underground utility asset detection equipment of FIG. 4;
FIG. 10 is a schematic representation of a user interface presenting an active job menu displayable by the electronic components of the underground utility asset detection equipment of FIG. 4;
FIG. 11 is a first status box presented by the user interface of FIG. 10;
FIG. 12 is a status table presented by the user interface of FIG. 10;
FIG. 13 is a map-type dialogue box presented by the user interface of FIG. 10;
FIG. 14 is a sidebar menu presented by the user interface of FIG. 10;
FIG. 15 is an accuracy reporting dialogue box presented by the user interface of FIG. 10;
FIG. 16 is a position source dialogue box presented by the user interface of FIG. 10;
FIG. 17 is an external GNSS dialogue box presented by the user interface of FIG. 10;
FIG. 18 is a paired device dialogue box presented by the user interface of FIG. 10;
FIG. 19 is a current target dialogue box presented by the user interface of FIG. 10; and
FIG. 20 is a target accuracy input dialogue box presented by the user interface of FIG. 10.

Before explaining the disclosed embodiments of the present invention in detail, it is to be understood that the invention is not limited in its application to the details of the particular arrangements shown since the invention is capable of other embodiments. Exemplary embodiments are illustrated in referenced figures of the drawings. It is intended that the embodiments and figures disclosed herein are to be considered illustrative rather than limiting. Also, the terminology used herein is for the purpose of description and not of limitation.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to the embodiments shown but are to be accorded the widest scope consistent with the principles and features disclosed herein. The figures, which are not necessarily to scale, depict selected embodiments and are not intended to limit the scope of embodiments of the invention. Skilled artisans will recognize that the examples provided herein have many useful alternatives that fall within the scope of embodiments of the invention.

It is to be understood that the phraseology and terminology used herein are for the purpose of description and should not be regarded as limiting. For example, the use of "including," "comprising," or "having" and variations thereof herein is meant to encompass the items listed thereafter and equivalents thereof, as well as additional items. As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

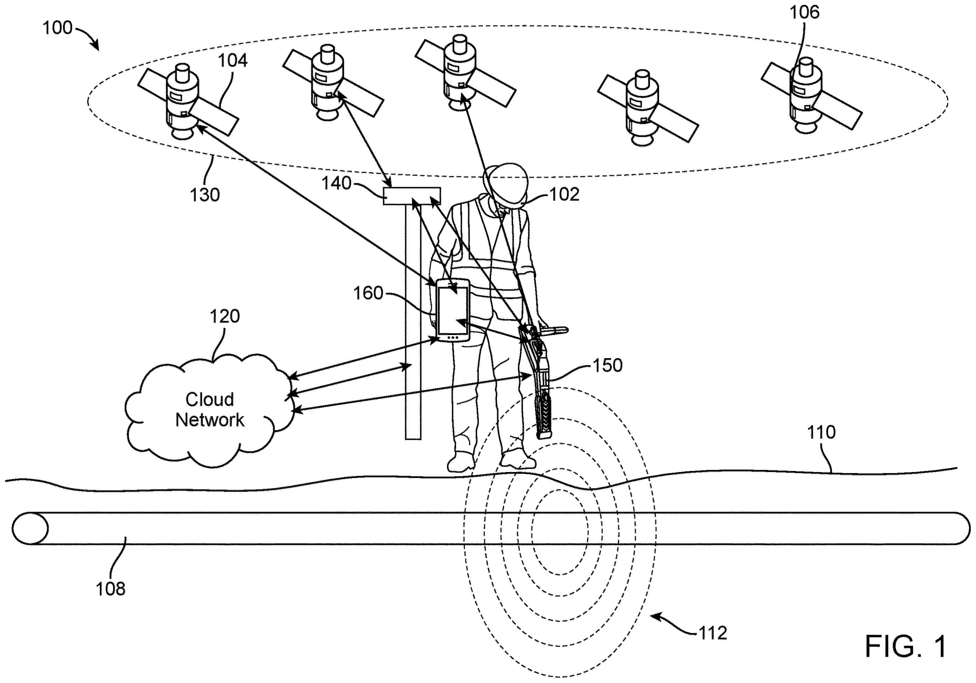

FIG. 1 illustrates various components of an underground utility asset detection system operating in an environment 100 in accordance with the teachings of this disclosure. The environment 100 includes an operator 102, a first satellite 104, a second satellite 106, an underground object 108, a ground surface 110, underground signals 112, and a cloud network 120. The first satellite 104 and the second satellite 106 are a subset of a larger satellite constellation 130. The satellite constellation 130, including the first satellite 104 and the second satellite 106, is part of a global navigation satellite system (GNSS) constellation (e.g., Global Positioning System (GPS), Galileo, Quasi-Zenith Satellite System (QZSS), etc.).

The underground object 108 is designed to be located at least partially or entirely under the ground surface 110. The underground object 108 is depicted as an elongated cylindrical pipe in FIG. 1, but it should be understood that the underground object 108 may be any underground object (e.g., a power cable, a duct, a fiber optic cable, a sewer drain, a footing, etc.). Further, the underground object 108 may be provided in the form of a metallic material or non-metallic material.

The underground signals 112 may be provided in the form of a magnetic field, sound waves, electromagnetic waves, etc. In some instances, the underground signals 112 are generated or induced by a separate signal generator device.

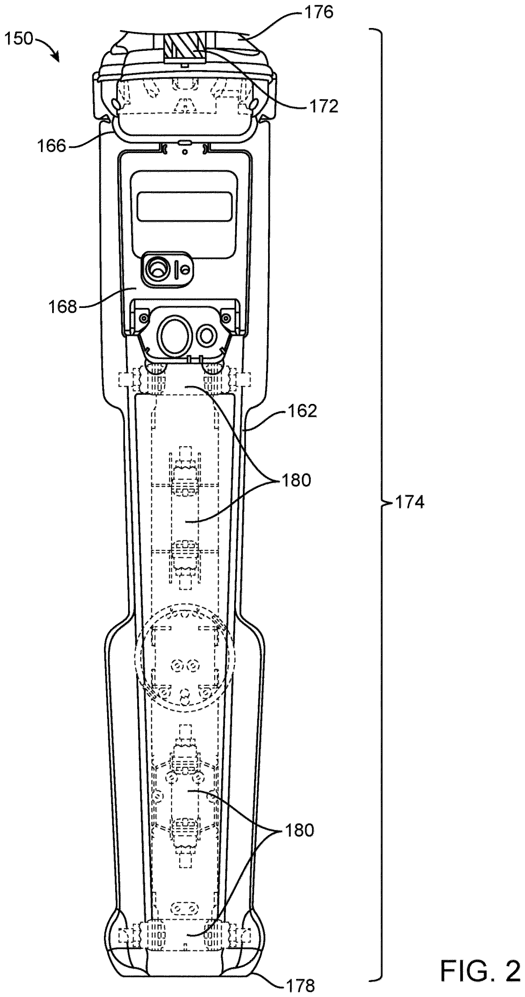

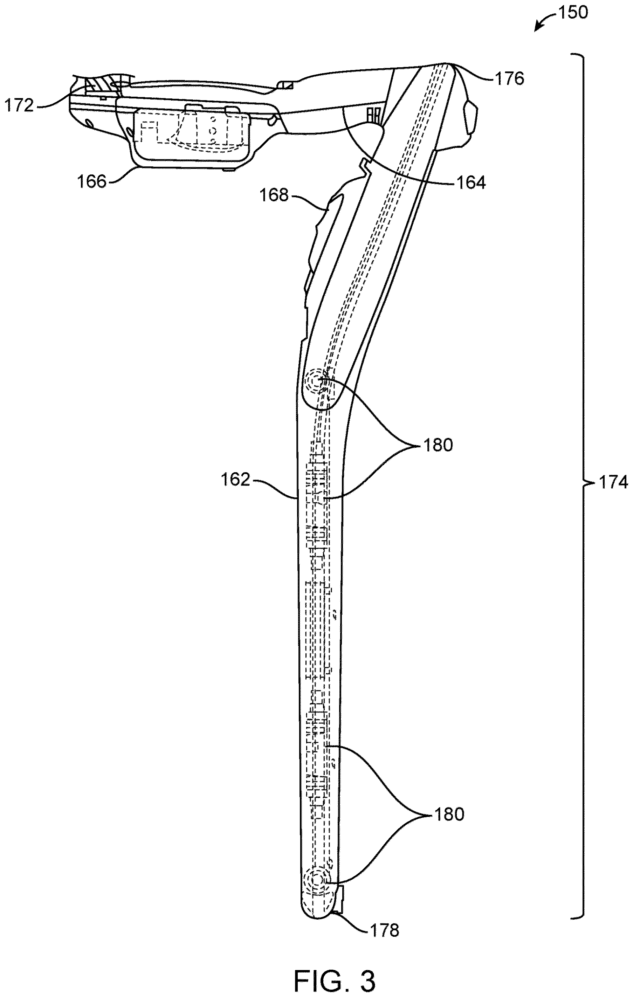

Referring still to FIG. 1, the underground detection equipment includes a locator 150 and, in some instances, an external GNSS device 140. In some instances, the underground detection equipment also includes a mobile device 160. The locator 150 can include one or more electromagnetic field antennas 180 (see FIGS. 2 and 3) configured to detect the underground signals 112. Accordingly, the locator 150 detects the underground object 108 based on the underground signals 112 emanating from the underground object 108.

The mobile device 160 may be provided in the form of a smartphone, a personal digital assistant, a handheld computer, etc. In order to determine geospatial positioning, the locator 150, the mobile device 160, and the external GNSS device 140 are each configured to receive geolocation data from the satellite constellation 130.

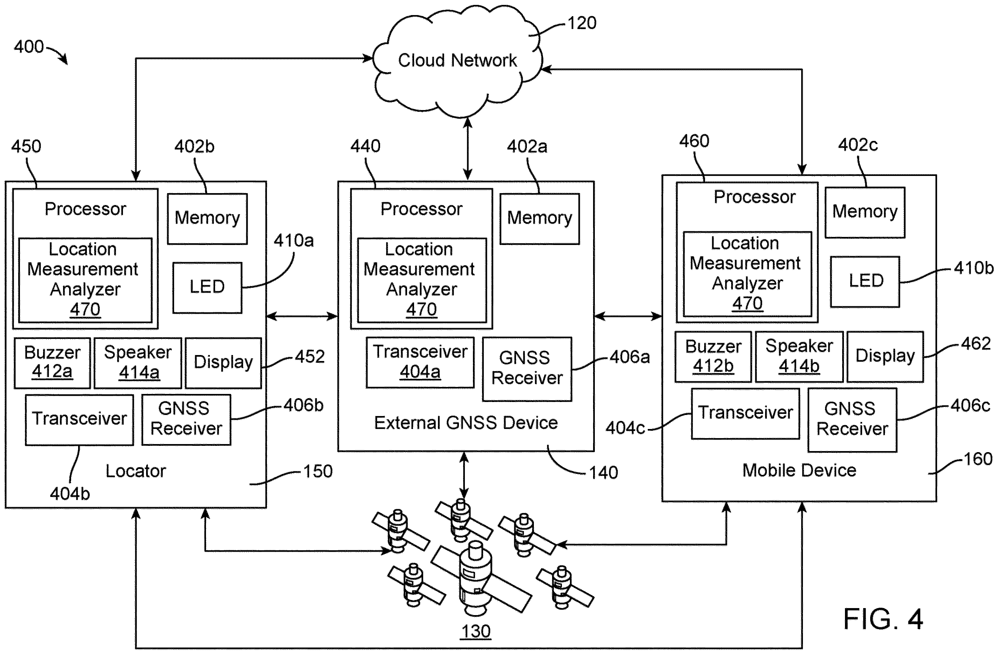

FIGS. 2 and 3 illustrate, in greater detail, an embodiment of the locator 150. The locator 150 is provided in the form of a wand 162, a handle 164, an electronics housing 166, a GNSS receiver 406b (see FIG. 4), a power module housing 168, a power module (not shown), and a GNSS antenna 172.

The wand 162 is defined by an elongated housing 174 having a top end 176, a bottom end 178, and at least one electromagnetic field antenna 180. The electromagnetic field antennas 180 are configured to generate a field strength signal in response to an electromagnetic field, such as the electromagnetic fields that are generated by underground current-carrying conductors or other underground assets that are connected directly or indirectly to a partnering electromagnetic signal transmitter. As a non-limiting example, the electromagnetic field antennas 180 can be provided in the form of ferrite rod antennas. Accordingly, the electromagnetic field antennas 180 can be used to detect the presence of underground assets. As depicted in FIGS. 2 and 3, four antennas 180 are associated with the housing 174 of the wand 162, although more or fewer antennas 180 may be included depending on the specific application of the locator 150.

The electronics housing 166 is coupled to the top end 176 of the wand 162. In some forms, the electronics housing 166 is coupled to the wand 162 by way of the handle 164. The GNSS antenna 172 can also be coupled to the electronics housing 166. In some forms, the GNSS antenna 172 is positioned inside the electronics housing 166. In some other forms, the GNSS antenna 172 is positioned along the handle 164. Additionally, in some other forms, the GNSS antenna 172 is coupled to the top end 176 of the wand 162. To aid in the detection of underground assets, the locator 150 can also include one or more of a display, a keypad, a speaker, a USB port, an accessory connector, a headphone connector, and Bluetooth modules, which can each be provided within the electronics housing 166 or can be coupled to the electronics housing 166.

The GNSS module (not shown) and various system electronics (not shown) are disposed within the electronics housing 166. The GNSS module includes a receiver for receiving satellite geolocation data, such as data transmitted via GPS, GLONASS, Baidu, Galileo, or other satellite constellations. In some forms, the GNSS module is enabled for real-time kinematic positioning (RTK) and, thus, is configured to receive RTK correction data. The GNSS module and the system electronics can automatically store satellite geolocation data to provide comprehensive mapping capabilities. Further, the system electronics can be configured to implement and direct the functions of the locator 150.

The power module housing 168 is coupled to the wand 162 and contains the power module (not shown). The power module housing 168 can be coupled to the wand 162 in a variety of locations anywhere between the top end 176 of the wand 162 and the bottom end 178 of the wand 162. In some forms, the power module includes a power supply and a battery (not shown). The power supply can be provided in the form of a switched-mode power supply with constant voltage output. In some embodiments, the battery is retained in a separate battery compartment. The battery can be provided in the form of a Lithium-Ion battery (Li-Ion), a D-cell alkaline battery, or a D-cell NiMH battery, to name a few non-limiting examples. Although the locator 150 is shown and described as an electromagnetic locator, the locator 150 can be provided in the form of another underground asset detection device, such as a ground penetrating radar device having a cart with a plurality of wheels, a magnetic locator device having an inductive sensor, a pipeline locator having a magnetometer, or other underground asset detection devices.

Referring in more detail to the underground utility asset detection equipment, FIG. 4 illustrates a block diagram of various electronic components 400 in communication with or part of the equipment. Specifically, the external GNSS device 140, the locator 150, and the mobile device 160 each include a memory 402a, 402b, 402c, a transceiver 404a, 404b, 404c, and a GNSS receiver 406a, 406b, 406c. The locator 150 and the mobile device 160 each further include one or more light-emitting diodes (LED) 410a, 410b, a buzzer 412a, 412b, and a speaker 414a, 414b. Further, the external GNSS device 140 includes a first processor 440, the locator 150 includes a second processor 450 and a locator display 452, and the mobile device 160 includes a third processor 460 and a mobile display 462. The first processor 440, the second processor 450, and the third processor 460 each include a location measurement analyzer 470. To aid in user operation, one or both of the locator display 452 and the mobile display 462 can be configured to display a user interface presenting an interactive environment run by a software application, such as a mobile application, as will be explained in greater detail below.

The external GNSS device 140, the locator 150, and the mobile device 160 are in communication with one another via the respective transceivers 404a, 404b, 404c. For example, the transceivers 404 a, 404b, 404c can be configured such that the external GNSS device 140, the locator 150, and the mobile device 160 can send and receive data from each other via wireless communication protocols such as Bluetooth, Wi-Fi Direct^{®}, ZigBee 9, Z-Wave ^{®}, a proprietary RF connection, etc.), or via a wired connection. Additionally, the external GNSS device 140, the locator 150, and the mobile device 160 can communicate with the cloud network 120 via the respective transceivers 404a, 404b, 404c by way of a Wi-Fi network, a cellular network, or other wireless communication networks. Further, the external GNSS device 140, the locator 150, and the mobile device 160 are in communication with the satellite constellation 130 and are capable of receiving geolocation data via the respective GNSS receivers 406a, 406b, 406c.

Referring again to FIG. 4, the first processor 440, the second processor 450, and the third processor 460 may be any suitable processing device or set of processing devices such as, but not limited to a microprocessor, a microcontroller-based platform, a suitable integrated circuit, one or more field programmable gate arrays (FPGAs), or one or more application-specific integrated circuits (ASICs). The memories 402a, 402b, 402c may be volatile memory (e.g., RAM, which may include magnetic RAM, ferroelectric RAM, and any other suitable forms); non-volatile memory (e.g., disk memory, FLASH memory, EPROMs, EEPROMs, non-volatile solid-state memory, etc.), unalterable memory (e.g., EPROMs), read-only memory, or high-capacity storage devices (e.g., hard drives, solid state drives, etc.). In some examples, the memories 402a, 402b, 402c include multiple types of memory, particularly both volatile memory and non-volatile memory.

Referring still to FIG. 4, the memories 402a, 402b, 402c are provided in the form of a computer-readable medium on which one or more sets of instructions, such as the software for operating the methods of the present disclosure, can be embedded. The embedded instructions may embody one or more of the methods or logic as described herein. In a particular embodiment, the embedded instructions may reside completely, or at least partially, within any one or more of the memories 402a, 402b, 402c, the computer-readable medium, the first processor 440, the second processor 450, and the third processor 460 during execution of the instructions.

The terms "non-transitory computer-readable medium" and "tangible computer-readable medium" should be understood to include a single medium or multiple media, such as a centralized or distributed database or associated caches and servers that store one or more sets of instructions. The terms "non-transitory computer-readable medium" and "tangible computer-readable medium" also include any tangible medium that is capable of storing, encoding, or carrying a set of instructions for execution by a processor or that causes a system to perform any one or more of the methods or operations disclosed herein. As used herein, the term "tangible computer-readable medium" includes any type of computer-readable storage device and/or storage disk and excludes propagating signals.

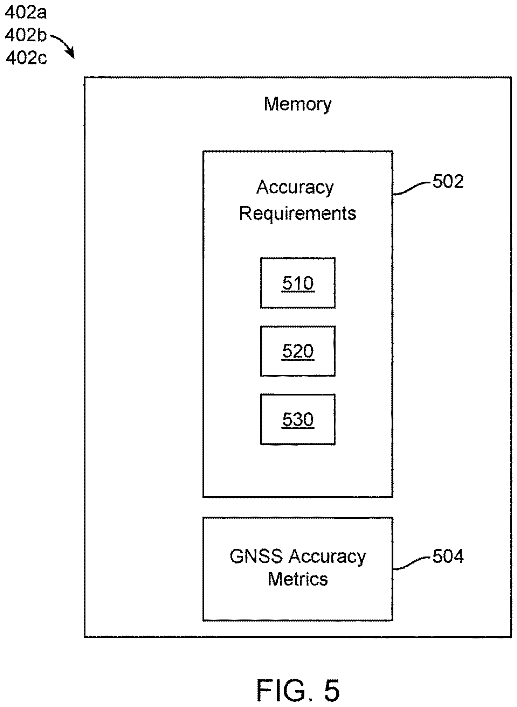

FIG. 5 is a more detailed block diagram of the memories 402a, 402b, 402c. The memories 402a, 402b, 402c include an accuracy requirements storage component 502 and GNSS accuracy metrics 504. In some instances, the accuracy requirements storage 502 includes a first logic table 510, a second logic table 520, and a third logic table 530.

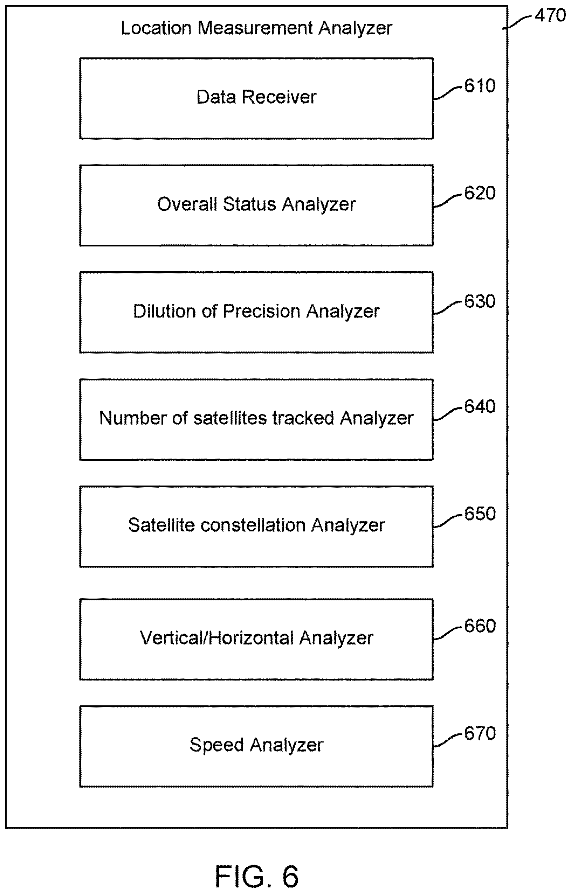

FIG. 6 is a more detailed block diagram of the location measurement analyzer 470. The location measurement analyzer 470 is defined by a data receiver 610, an overall status analyzer 620, a dilution of precision analyzer 630, a number of satellites tracked analyzer 640, a satellite constellation analyzer 650, a vertical and horizontal analyzer 660, and a speed analyzer 670. In operation, the data receiver 610 receives data related to the underground signals 112 (see FIG. 1) detected by the electromagnetic field antennas 180 of the locator 150. The data receiver 610 also receives geospatial location data received by the GNSS receivers 406a, 406b, 406c from the satellite constellation 130 (see FIG. 1). It should be understood that any or all of the components of the location measurement analyzer 470, e.g., the data receiver 610, the overall status analyzer 620, the dilution of precision analyzer 630, the number of satellites tracked analyzer 640, the satellite constellation analyzer 650, the vertical and horizontal analyzer 660, and the speed analyzer 670 may be provided as part of the GNSS receivers 406a, 406b, 406c, in addition to or alternatively to being provided as components of the location measurement analyzer 470.

In operation, the dilution of precision analyzer 630 determines mathematical error propagation in the precision of location measurements based on the relative geometry of one or more satellites being tracked (e.g., the first satellite 104 and the second satellite 106 of FIG. 1). For example, the dilution of precision analyzer 630 performs a dilution of precision (DOP) calculation known in the art to assess Horizontal DOP (HDOP), Vertical DOP (VDOP), Time DOP (TDOP), Positional DOP (PDOP), and Geometric DOP (GDOP) associated with a set of geospatial location data received by any or all the GNSS receivers 406a, 406b, 406c. In some forms, the output of the DOP calculation is a DOP value for each of the categories previously listed, e.g., an HDOP value, a VDOP value, a TDOP value, a PDOP value, and/or a GDOP value. In some forms, the confidence level in GNSS data DOP values output from the dilution of precision analyzer 630 can be described as shown in Table 1 for reference.

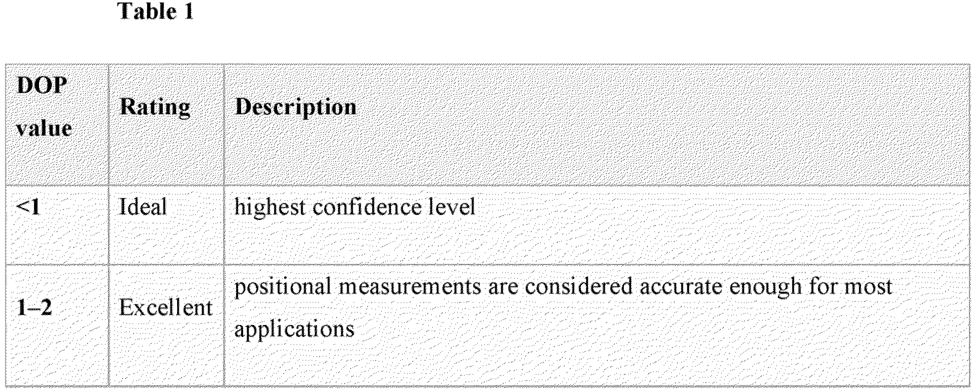

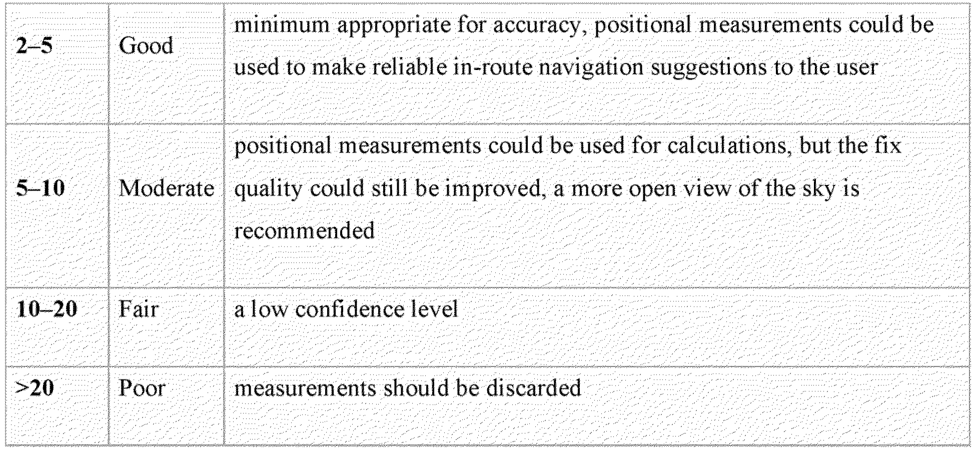

Additionally, in operation, the number of satellites tracked analyzer 640 determines a number of satellites that are in view in the sky above the locations being measured that are tracked by the GNSS receivers 406a, 406b, 406c. For example, with an unobstructed view of the sky above North America or Europe, a GNSS system may track 25 or more satellites. Next, the satellite constellation analyzer 650 determines which types of satellite constellations have been tracked with respect to the received GNSS geolocation data, e.g., Global Positioning System (GPS), Galileo, Quasi-Zenith Satellite System (QZSS), etc. Further, the vertical and horizontal analyzer 660 determines a vertical accuracy value and a horizontal accuracy value. In some forms, the vertical accuracy value and the horizontal accuracy value are provided in the form of a distance value, such as a distance between about 1 centimeter to about 50 meters. The vertical accuracy value and the horizontal accuracy value associated with a set of geospatial location data can be determined by the GNSS receiver 406a, 406b, 406c receiving the set of geospatial location data.

Referring further to FIG. 6, in operation, the speed analyzer 670 tracks speed values that are output from the GNSS receivers 406a, 406b, 406c, or calculated distances between a latest position and a previous position. The calculated distances may be measured using a "haversine" function, which determines a great-circle distance between two points on a sphere given the longitudes and latitudes of the points. In some forms, the speed analyzer 670 is activatable and de-activatable by the user. When the speed analyzer 670 is activated, the speed analyzer 670 prevents the electronic components 400 from taking or storing geospatial location data if the speed values are greater than a particular speed threshold value.

The location measurement analyzer 470 is designed to access a variety of user-selectable threshold values that can be stored in any one or more of the memories 402a, 402b, 402c. The user can input user-selectable threshold values via the user interface, such as by way of the locator display 452 and/or the mobile display 462. The variety of user-selectable threshold values can include, for example, an HDOP threshold value, a VDOP threshold value, a TDOP threshold value, a PDOP threshold value, a GDOP threshold value, a number of satellites tracked threshold value, a satellite constellations tracked threshold value, a vertical accuracy threshold value, and/or a horizontal accuracy threshold value. In some forms, one or more of the memories 402a, 402b, 402c can be provided with default values for each of the user-selectable threshold values, and if desired, the user can modify the user-selectable threshold values.

For example, the default value, or user selected value, for each of the HDOP threshold value, the VDOP threshold value, the TDOP threshold value, the PDOP threshold value, and the GDOP threshold value may be a value ranging from 0 to 20, and in some specific instances, 2. Accordingly, if each of the HDOP value, the VDOP value, the TDOP value, the PDOP value, and/or the GDOP value are determined to be less than or equal to 2, the dilution of the precision analyzer 630 determines that all the DOP values meet the required thresholds. However, if any of the HDOP value, the VDOP value, the TDOP value, the PDOP value, and/or the GDOP value are determined to be greater than 2, the dilution of the precision analyzer 630 determines that the DOP values do not meet the required thresholds and that only some of the requirements have been met. Further, if all the DOP values are greater than 2, the dilution of the precision analyzer 630 determines that none of the requirements have been met. In the aspects described herein, each of the DOP threshold value values can be set individually or all together as the same threshold value.

Next, the default value, or user-selected value, for the number of satellites tracked threshold value can be, for example, a value ranging from 4 to 50, such as 10. In some forms, the number of satellites tracked threshold value is defined by multiple values, such as a minimum target value and a best target value. By way of example, the minimum target value can be set to 10 and the best target value can be set to 15. Accordingly, if the number of satellites tracked is 10 or more, the number of satellites tracked analyzer 640 determines that some of the requirements are met, and if the number of satellites tracked is 15 or more, the number of satellites tracked analyzer 640 determines that all the requirements are met. If less than 10 satellites are tracked, the number of satellites tracked analyzer 640 determines that no requirements are met.

Further, the default value, or user-selected value, for the satellite constellations tracked threshold value may be one or more types of satellite constellations, such as at least the GPS and the Galileo satellite constellations. Accordingly, if no GPS or Galileo satellites have been tracked, the satellite constellation analyzer 650 determines that no requirements are met. If at least one GPS or Galileo satellite has been tracked, the satellite constellation analyzer 650 determines that some of the requirements are met. If both GPS and Galileo satellites have been tracked, the satellite constellation analyzer 650 determines that all the requirements are met. In some instances, the satellite constellation tracked threshold value can be defined such that all of the requirements are only deemed to be met when the satellite constellations tracked are only the satellite constellations selected by the user. Accordingly, with respect to the above example, if the GPS, the Galileo, and the Quasi-Zenith satellites have all been tracked, the satellite constellation analyzer 650 determines that only some of the requirements are met because an additional, unselected satellite constellation, the Quasi-Zenith, has been tracked.

Next, the default value, or user-selected value, for the vertical accuracy threshold value and a horizontal accuracy threshold value can be, for example, 10 meters. Accordingly, if neither the vertical accuracy value nor the horizontal accuracy value is 10 meters or less, the vertical and horizontal analyzer 660 determines that no requirements are met. If one of the vertical accuracy value or the horizontal accuracy value is 10 meters or less, the vertical and horizontal analyzer 660 determines that some requirements are met. If both the vertical accuracy value and the horizontal accuracy value are 10 meters or less, the vertical and horizontal analyzer 660 determines that all requirements are met.

In some embodiments, each of the dilution of precision analyzer 630, the number of satellites tracked analyzer 640, the satellite constellation analyzer 650, and the vertical and horizontal analyzer 660, are also configured to assign color-coded scores based on whether or how many of the requirements described above have been met. For example, each of the location measurement accuracy analyzers, e.g., the dilution of precision analyzer 630, the number of satellites tracked analyzer 640, the satellite constellation analyzer 650, and the vertical and horizontal analyzer 660 can access one of the first logic table 510, which provides a three-score output, or the second logic table 520, which provides a two-score output based on whether, or how many of, the requirements described above have been met.

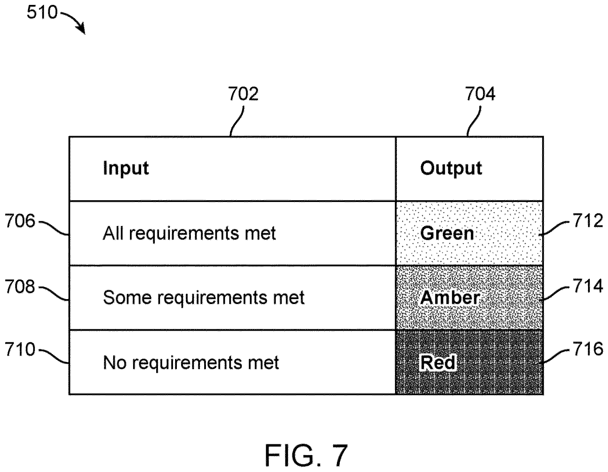

As shown in FIG. 7, the first logic table 510 includes a first input column 702 and a first output column 704. The first input column 702 includes a first input 706, a second input 708, and a third input 710. The first output column 704 includes a green score output 712, an amber score output 714, and a red score output 716. The first input 706 is paired with the green score output 712, e.g., when all accuracy requirements are met for a given location measurement accuracy analyzer, the green score output 712 is provided. The second input 708 is paired with the amber score output 714, e.g., when only some accuracy requirements are met for a given location measurement accuracy analyzer, the amber score output 714 is provided. The third input 710 is paired with the red score output 716, e.g., when no accuracy requirements are met for a given location measurement accuracy analyzer, the red score output 716 is provided.

For example, if all the requirements are met for the HDOP value, the VDOP value, the TDOP value, the PDOP value, and the GDOP, as described above, the dilution of precision analyzer 630 provides the green score output 712. Similarly, if all the requirements are met for the number of satellites tracked, as described above, the number of satellites tracked analyzer 640 provides the green score output 712. Further, if all the requirements are met for the type of satellite constellations tracked, as described above, the satellite constellation analyzer 650 provides the green score output 712. Finally, if all the requirements are met for the vertical accuracy value and the horizontal accuracy value, as described above, the vertical and horizontal analyzer 660 provides a green score output 712.

Further, when only some requirements are met, or no requirements are met, as determined by the dilution of precision analyzer 630, the number of satellites tracked analyzer 640, the satellite constellation analyzer 650, or the vertical and horizontal analyzer 660, the respective analyzer provides the amber score output 714 or the red score output 716, respectively. Accordingly, each of the dilution of precision analyzer 630, the number of satellites tracked analyzer 640, the satellite constellation analyzer 650, and the vertical and horizontal analyzer 660 provide an individual score output as it relates to each set of geospatial location data received by the GNSS receivers 406a, 406b, 406c.

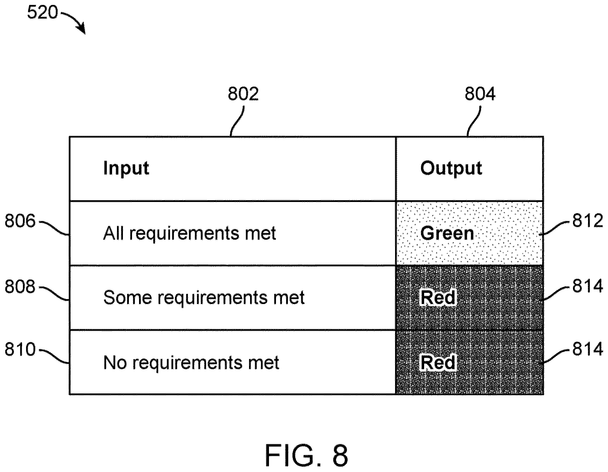

As shown in FIG. 8, in some forms, the dilution of precision analyzer 630, the number of satellites tracked analyzer 640, the satellite constellation analyzer 650, and the vertical and horizontal analyzer 660 are configured to provide a binary score output. For example, the second logic table 520 includes a second input column 802 and a second output column 804. The second input column 802 includes a fourth input 806, a fifth input 808, and a sixth input 810. The second output column 804 includes a green score output 812 and a red score output 814.

The fourth input 806 is paired with the green score output 812, e.g., when all accuracy requirements are met for a given location measurement accuracy analyzer, the green score output 812 is provided. The fifth input 808 is paired with the red score output 814, e.g., when only some accuracy requirements are met for a given location measurement accuracy analyzer, the red score output 814 is provided. The sixth input 810 is also paired with the red score output 814, e.g., when no accuracy requirements are met for a given location measurement accuracy analyzer, the red score output 814 is also provided.

For example, if all the requirements are met for the HDOP value, the VDOP value, the TDOP value, the PDOP value, and the GDOP, as described above, the dilution of precision analyzer 630 provides the green score output 812. Similarly, if all the requirements are met for the number of satellites tracked, as described above, the number of satellites tracked analyzer 640 provides the green score output 812. Further, if all the requirements are met for the type of satellite constellations tracked, as described above, the satellite constellation analyzer 650 provides the green score output 812. Finally, if all the requirements are met for the vertical accuracy value and the horizontal accuracy value, as described above, the vertical and horizontal analyzer 660 provides a green score output 812.

Still referring to FIG. 8, when only some requirements are met or no requirements are met, as determined by the dilution of precision analyzer 630, the number of satellites tracked analyzer 640, the satellite constellation analyzer 650, or the vertical and horizontal analyzer 660, the respective analyzer provides the red score output 814. It should be noted that in some forms, the dilution of precision analyzer 630, the number of satellites tracked analyzer 640, the satellite constellation analyzer 650, and the vertical and horizontal analyzer 660 are all configured to access only the first logic table 510 for color score output or access only the second logic table 520 for color score output, but in other forms, one or more of the analyzers 630, 640, 650, and 660 access only the first logic table 510 and the remaining analyzers access only the second logic table 520. In some embodiments, the user can select whether the first logic table 510 or the second logic table 520 is applied based on a selection between a three-score output (first logic table 510) and a two-score output (second logic table 520).

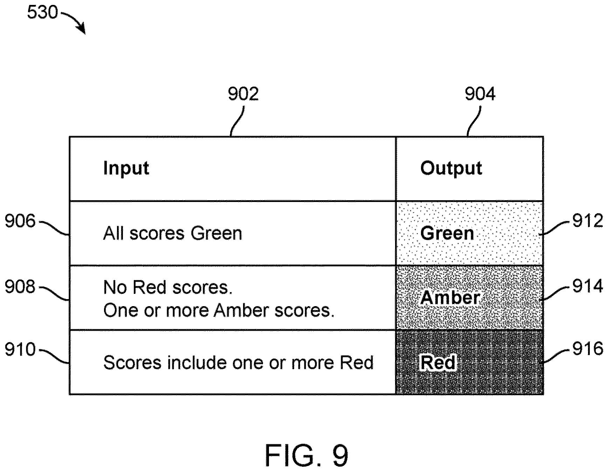

FIG. 9 is a more detailed illustration of a third logic table 530, which is in communication with and can be accessed by the overall status analyzer 620. The third logic table 530 provides color-coded scores based on the score outputs of the dilution of precision analyzer 630, the number of satellites tracked analyzer 640, the satellite constellation analyzer 650, and the vertical and horizontal analyzer 660. The third logic table 530 includes a third input column 902 and a third output column 904. The third input column 902 includes a seventh input 906, an eighth input 908, and a ninth input 910. The third output column 904 includes an overall green score output 912, an overall amber score output 914, and an overall red score output 916.

The seventh input 906 is paired with the overall green score output 912, e.g., when all of the score outputs from the dilution of precision analyzer 630, the number of satellites tracked analyzer 640, the satellite constellation analyzer 650, and the vertical and horizontal analyzer 660, are provided as green score outputs 712, 812, the overall green score output 912 is provided. The eighth input 908 is paired with the overall amber score output 914, e.g., when the score outputs from the dilution of precision analyzer 630, the number of satellites tracked analyzer 640, the satellite constellation analyzer 650, and the vertical and horizontal analyzer 660, include one or more amber scores 714, but no red scores 716, 814, the overall amber score output 914 is provided. The ninth input 910 is paired with the overall red score output 916, e.g., if any of the score outputs from the dilution of precision analyzer 630, the number of satellites tracked analyzer 640, the satellite constellation analyzer 650, and the vertical and horizontal analyzer 660 are red scores 716, 814, the overall red score output 916 is provided.

It should be understood that a two-score output can also be provided from the overall status analyzer 620. For example, if any of the score outputs from the dilution of precision analyzer 630, the number of satellites tracked analyzer 640, the satellite constellation analyzer 650, and the vertical and horizontal analyzer 660 include the amber score 714 or the red scores 716, 814, then the overall red score output 916 is provided. Otherwise, the overall green score output 912 is provided.

It should also be understood that the user can select, via the user interface, to have one or more of the dilution of precision analyzer 630, the number of satellites tracked analyzer 640, the satellite constellation analyzer 650, or the vertical and horizontal analyzer 660 turned off or to have the overall status analyzer 620 ignore the output of one or more of the dilution of precision analyzer 630, the number of satellites tracked analyzer 640, the satellite constellation analyzer 650, or the vertical and horizontal analyzer 660. Accordingly, the third output column 904 of the overall status analyzer 620 only takes into consideration the score outputs from the analyzers 630, 640, 650, and 660 that are active or acknowledged.

In operation, the overall status analyzer 620 determines the overall status of geospatial location measurement accuracy for each set of geospatial location data. In response, the underground utility asset detection equipment can provide various forms of sensory feedback to the user to indicate the output of the overall status analyzer 620. For example, the overall color score outputs 912, 914, and 916 from the overall status analyzer 620 may be presented to a user via the LEDs 410a, 410b (see FIG. 4) or via the user interface, which can be displayed on one or more of the locator display 452 and the mobile display 462 (see FIG. 4). In some instances, the one or more of the LEDs 410a, 410b may provide visible warnings when the overall score transitions from the overall green score output 912 to the overall amber score output 914 to the overall red score output 916, or from to the overall green score output 912 to the overall red score output 916 and vice versa. Further, the locator 150 or mobile device may provide audible warnings when the overall score transitions from the overall red score output 916 to the overall amber score output 914 or to the overall green score output 912, or from the overall red score output 916 to the overall green score output 912 and vice versa. Alternatively, or in addition, one or more symbols, LED illumination patterns, or color schemes corresponding to the overall color score outputs 912, 914, and 916 may be displayed on the locator display 452 or the mobile display 462.

In some forms, the locator 150 or mobile device 160 may also provide audible feedback correlated to specific color-coded scores or transitions between the scores. For example, the speakers 414a, 414b of the locator 150 or mobile device 160 may provide audible warnings when the overall score transitions from the overall green score output 912 to the overall amber score output 914 to the overall red score output 916, or from to the overall green score output 912 to the overall red score output 916 and vice versa. Further, the locator 150 or mobile device 160 may provide audible warnings when the overall score transitions from the overall red score output 916 to the overall amber score output 914 or to the overall green score output 912, or from the overall red score output 916 to the overall green score output 912 and vice versa. In some instances, the locator 150 or mobile device 160 may also provide tactile vibration feedback to the user based on the color-coded score or transitions between the scores. For example, the buzzers 412a, 412b of the locator 150 or the mobile device 160 may vibrate when the overall score transitions from the overall red score output 916 to the overall amber score output 914 to the overall green score output 912, or from the overall red score output 916 to the overall green score output 912 and vice versa.

In addition, the location measurement analyzer 470 may prevent the locator 150 or mobile device 160 from capturing or storing underground measurement points or geospatial location data unless the overall green score 912 or the overall amber score 914 has been achieved, and, thus, the relevant accuracy requirements are met. In some forms, the locator 150 or mobile device 160 may be inoperable or locked until the relevant accuracy requirements are met.

The user can also select the overall score threshold. For example, during a method of surveying underground assets, underground signal data corresponding to the underground signals 112 detected by the locator 150 is typically stored in the memories 402a, 402b, 402c with GNSS geospatial location data received by the GNSS receivers 406a, 406b, 406c. If the user has selected the overall green score output 912 as the threshold, the data corresponding to the underground signals 112 and the GNSS geospatial location data will not be stored in the memories 402a, 402b, 402c during the surveying method unless the overall score output is an overall green score output 912. In some instances, the data may be stored in one or more of the memories 402a, 402b, 402c and include a warning flag or indicator of suboptimal accuracy.

In the instance where the overall score output meets the threshold requirements, the overall score outputs and underlying data are stored in one or more of the memories 402a, 402b, 402c with the associated GNSS geospatial location data. Accordingly, in a particular survey data set stored in the memories 402a, 402b, 402c, the accuracy of the GNSS geospatial location data is associated with the corresponding underground signal data. Even further, any or all of the survey data set can be transmitted via one or more of the transceivers 404a, 404b, 404c to the cloud network 120 and stored on a remote server, and the cloud network 120 can be accessed by a remote device. Accordingly, remote devices having access to the cloud network 120 can be used to analyze one or more of the underground signal data, corresponding GNSS geospatial location data, and the overall score outputs and underlying data. In this way, sophisticated back-end analysis can be provided to assess the accuracy and confidence in the survey data.

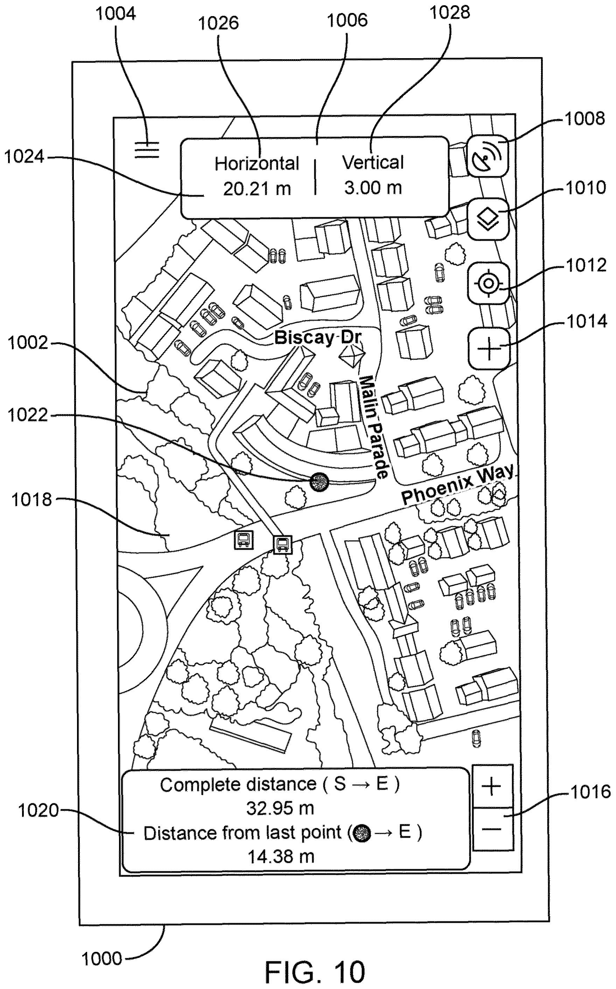

As one example of the principles described above, FIG. 10 illustrates an active job menu 1002 of an exemplary user interface 1000 that is displayable as an interactive touch screen via the locator display 452 or the mobile display 462 of the underground utility asset detection equipment of FIG. 4. Here, when the user is beginning an active survey process, where the user is locating underground signals 112 with the locator 150 and pairing the underground asset data with GNSS geospatial location data, the user can open the active job menu 1002. As shown in FIG. 10, the active job menu 1002 includes a map sidebar button 1004, an accuracy status icon 1006, a GNSS status icon 1008, a map layers button 1010, a center map button 1012, an add details button 1014, a zoom control 1016, a map 1018, a distance indicator 1020, and a current location indicator 1022.

In operation, the accuracy status icon 1006 provides real-time feedback associated with the accuracy of the received GNSS geospatial location data by displaying a color that corresponds to the score output of the overall status analyzer 620, e.g., the overall red score output 916, the overall amber score output 914, or the overall green score output 912. For users with differently abled visual senses, the accuracy status icon 1006 can be configured to display a different set of corresponding colors, patterns, or animations, for example, if the user is color blind. As described above, in some forms, one or more of the dilution of precision analyzer 630, the number of satellites tracked analyzer 640, the satellite constellation analyzer 650, and the vertical and horizontal analyzer 660 can be turned off or ignored by the overall status analyzer 620. Accordingly, at the user's preference, the accuracy status icon 1006 may only reflect the geospatial location data accuracy with respect to, for example, the vertical accuracy value and the horizontal accuracy value.

In some embodiments, the accuracy status icon 1006 may display various accuracy values that are contributing to the overall accuracy score output by the overall status analyzer 620. For example, as shown in FIG. 10, a horizontal accuracy value 1026 and a vertical accuracy value 1028 can be displayed in the accuracy status icon 1006 as numerical values 1024. The accuracy status icon 1006 can be customizable to display any combination of the DOP values, the number of satellites tracked value, the satellite constellations tracked value, the vertical accuracy value 1028, or the horizontal accuracy value 1026. Further, the accuracy status icon 1006 can be configured to display any of the accuracy values regardless of whether those values are currently set to be ignored by the overall status analyzer 620.

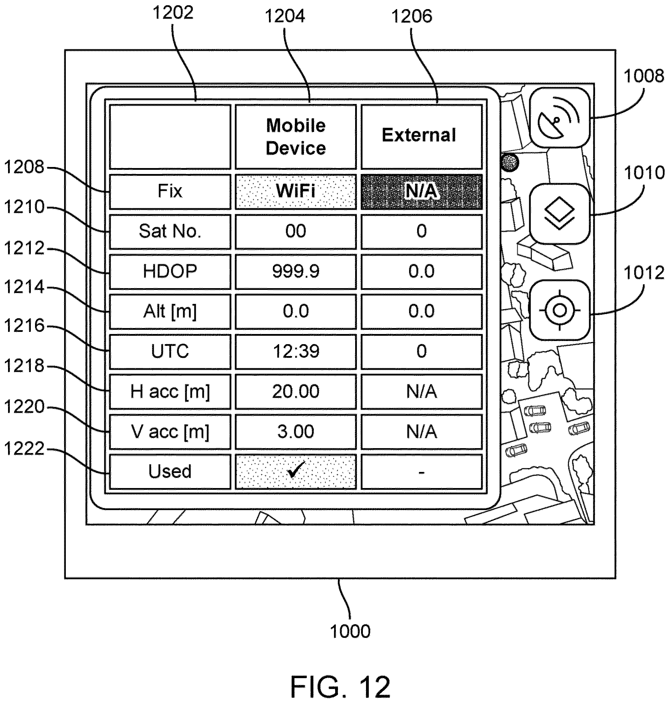

Similarly, as illustrated in FIG. 10, the GNSS status icon 1008 can provide visual information regarding the score output of the overall status analyzer 620. The GNSS status icon 1008 can be customized by the user to be displayed instead of, or in addition to, the accuracy status icon 1006. The GNSS status icon 1008 can follow the same visual display principles described above with respect to the accuracy status icon 1006 as it relates to displaying a color that corresponds to the score output of the overall status analyzer 620, e.g., the overall red score output 916, the overall amber score output 914, or the overall green score output 912. Also, like the accuracy status icon 1006, for a user with differently abled visual senses, the GNSS status icon 1008 can be configured to display a different set of corresponding colors, patterns, or animations, for example, if the user is color blind. Further, in some forms, the GNSS status icon 1008 flashes (e.g., visible /invisible at 1Hz) while waiting for a GNSS fix, and the GNSS status icon 1008 is solid when the GNSS fix is achieved. Thus, in operation, the GNSS status icon 1008 is solid when geospatial location data is available from a given position source. In some forms, the GNSS status icon 1008 can be selected to open a status table 1202, which is described further with respect to FIG. 12.

Referring still to FIG. 10, in some instances, the add details button 1014 may be used to designate a point of interest (POI). In some instances, the add details button 1014 may be used to attach an image to a location.

In some forms, the distance indicator 1020 may be selectively shown or hidden on the map 1018. Further, the distance indicator 1020 shows a distance between the current location indicator 1022 and the end of the survey.

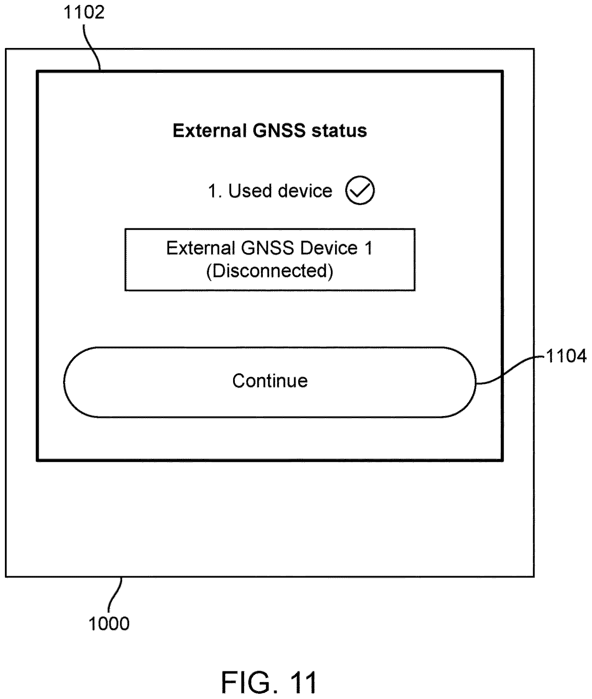

FIG. 11 illustrates a first status box 1102 of the user interface 1000. In some forms, upon startup of the user interface 1000, the first status box 1102 is provided to inform the user about the status of the source of GNSS geospatial location data that is being used by the location measurement analyzer 470/user interface 1000. For example, as explained above with respect to FIG. 4, one or more of the locator 150, the mobile device 160, and the external GNSS device 140 are provided with a GNSS receiver 406a, 406b, 406c. Accordingly, the first status box 1102 can display to the user which source of GNSS geospatial location data is currently being used and what the status of that source is. For example, the first status box 1102 can indicate whether the source of GNSS geospatial location data, here "External GNSS Device 1" is connected or disconnected, e.g., in communication with the device on which the user interface 1000 is displayed. A continue button 1104 closes the first status box 1102 and navigates the user to the active job menu 1002.

FIG. 12 illustrates a status table 1202 of the user interface 1000. In operation, when the GNSS status icon 1008 of FIG. 10 is selected (e.g., pressed via a touchscreen) by the user, the status table 1202 is displayed. The status table 1202 includes a mobile device column 1204 and an external device column 1206. The status table 1202 includes a fix type row 1208, a number of satellites tracked row 1210, an HDOP row 1212, an altitude row 1214, a Universal Time Coordinated (UTC) row 1216, a horizontal accuracy row 1218, a vertical accuracy row 1220, and a used row 1222. The fix type row 1208 may indicate fix types such as Wi-Fi or cellular, which may be color-coded (e.g., red, amber, green, etc.). The number of satellites tracked row 1210, the HDOP row 1212, the altitude row 1214, the UTC row 1216, the horizontal accuracy row 1218, and the vertical accuracy row 1220 may indicate corresponding numerical values. The used row 1222 may indicate whether the mobile device 160 or another source, such as the locator 150 or the external GNSS device 140, is currently being used as the source of GNSS geospatial location data by way of use statuses such as a checkmark or a dash, which may be color-coded (e.g., blank, red, amber, green, etc.). As shown in the external device column 1206, if the locator 150 or the external GNSS device 140 is disconnected or unavailable, the external device column 1206 displays zeros or "N/A" where applicable.

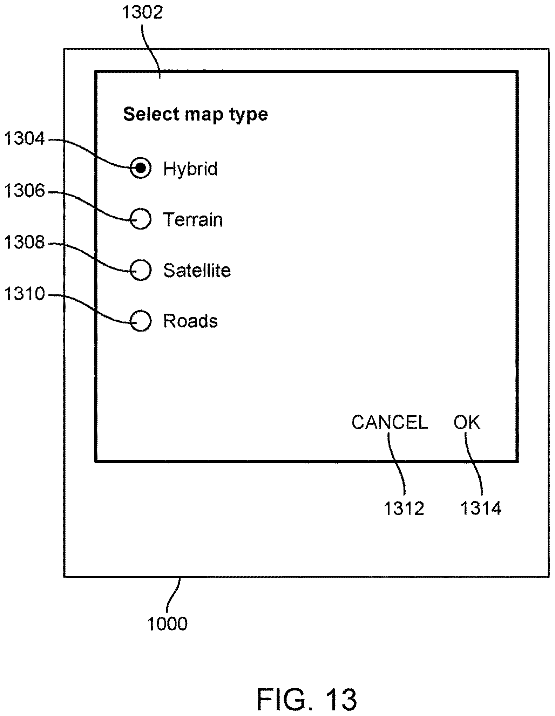

FIG. 13 illustrates a map-type dialogue box 1302 of the user interface 1000. In operation, when the map layers button 1010 of FIG. 10 is clicked, the map-type dialogue box 1302 is displayed. The map-type dialogue box 1302 includes a hybrid selector 1304, a terrain selector 1306, a satellite selector 1308, a roads selector 1310, a cancel button 1312, and an OK button 1314. In operation, a user may toggle amongst standard views available in known digital maps, e.g., Google Maps, via the hybrid selector 1304, the terrain selector 1306, the satellite selector 1308, or the roads selector 1310. Thus, various map layers may be selected via the map-type dialogue box 1302.

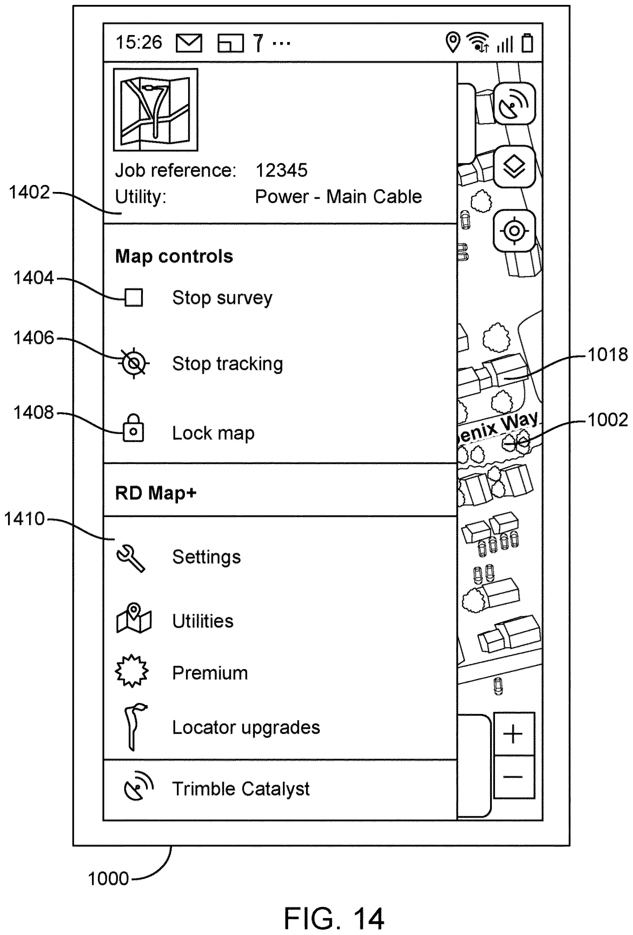

FIG. 14 is a sidebar menu 1402 of the user interface 1000. In operation, when the map sidebar button 1004 of FIG. 10 is clicked, the sidebar menu 1402 is displayed. The sidebar menu 1402 includes a stop survey button 1404, a tracking button 1406, a map lock button 1408, and a settings button 1410. In operation, the stop survey button 1404 stops the active survey and returns the user interface 1000 to the active job menu 1002. In operation, the tracking button 1406 starts or stops a tracking function that centers the map 1018 around a selected GNSS position. In operation, the map lock button 1408 locks the map 1018 into place to prevent panning or zooming.

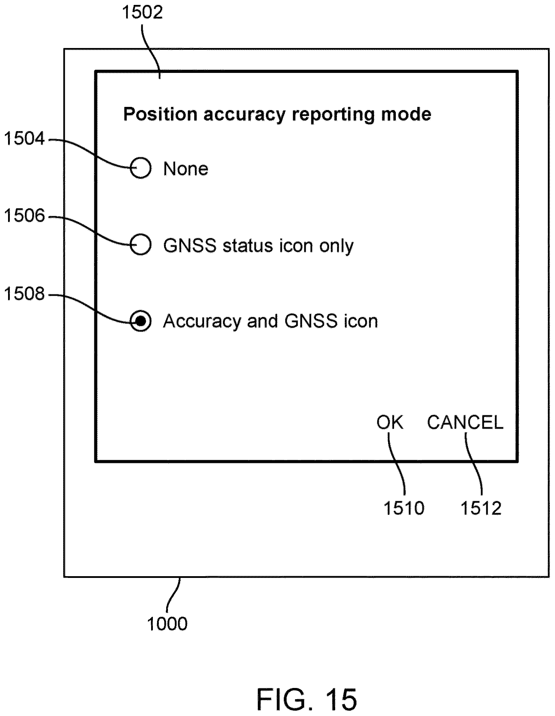

FIG. 15 is an accuracy reporting dialogue box 1502 of the user interface 1000. The accuracy reporting dialogue box 1502 includes a none selector 1504, a GNSS icon only selector 1506, an accuracy and GNSS icon selector 1508, an OK button 1510, and a cancel button 1512. When the none selector 1504 is selected, the accuracy status icon 1006 and the GNSS status icon 1008 are not displayed in the active job menu 1002. In operation, when the GNSS icon only selector 1506 is selected, the GNSS status icon 1008 of FIG. 10 is displayed in the active job menu 1002, but not the accuracy status icon 1006. In operation, when the accuracy and GNSS icon selector 1508 is selected, the accuracy status icon 1006 and the GNSS status icon 1008 of FIG. 10 are both displayed in the active job menu 1002. The accuracy reporting dialogue box 1502 can also be configured with a selector to display only the accuracy status icon 1006 in the active job menu 1002 when selected.

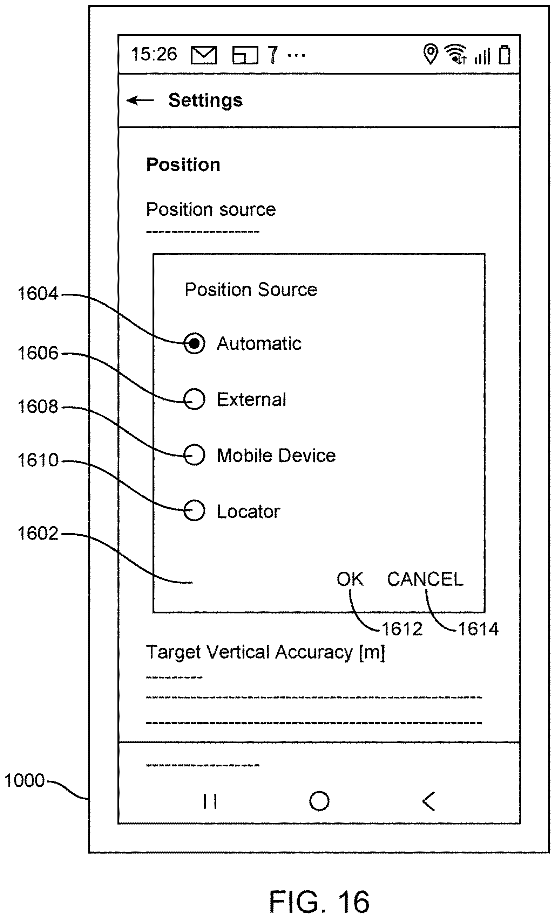

FIG. 16 is a position source dialogue box 1602 of the user interface 1000. The position source dialogue box 1602 includes an automatic position source selector 1604, an external position source selector 1606, a mobile device position source selector 1608, a locator position source selector 1610, an OK button 1612, and a cancel button 1614. In operation, the position source dialogue box 1602 enables mapping selection between an automatic mode or a specific location source. In operation, when the automatic position source selector 1604 is selected to enable an automatic mode in which the source of GNSS geospatial position data is automatically selected in the following order of priority if the source is available: (1) an external GNSS device, such as the external GNSS device 140 having the GNSS receiver 406a; (2) a locator, such as the locator 150 having the GNSS receiver 406b; and (3) a mobile device, such as the mobile device 160 having the GNSS receiver 406c. If the external position source selector 1606 is selected to enable an external mode, GNSS geospatial position data is obtained via external sources or the external GNSS device 140. Moreover, in operation, if the mobile device position source selector 1608 is selected to enable mobile mode, geospatial position data is obtained via the mobile device 160. Further, in operation, if the locator position source selector 1610 is selected to enable locator mode, geospatial position data is obtained via the locator 150. Thus, a user may select which source the location measurement analyzer 470 of FIG. 9 receives the GNSS geospatial position data from.

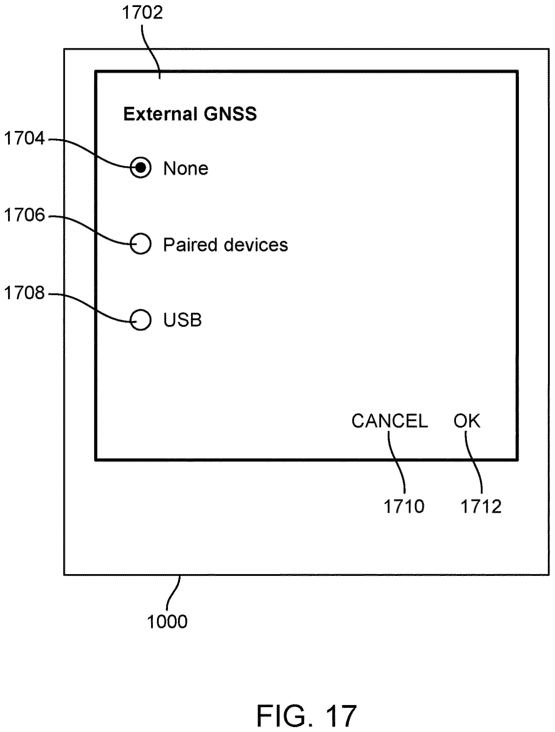

FIG. 17 is an external GNSS dialogue box 1702 of the user interface 1000. The external GNSS dialogue box 1702 includes a none selector 1704, a paired device selector 1706, a USB selector 1708, an OK button 1710, and a cancel button 1712. In use, the selectors of the external GNSS dialogue box 1702 determine what communication method the device on which the user interface 1000 is displayed uses to identify the external GNSS device 140 from which GNSS geospatial position data will be obtained. For example, the paired device selector 1706 results in the device on which the user interface 1000 is displayed, e.g., the locator 150 or the mobile device 160, searching for the external GNSS device 140 by way of devices that are paired via Bluetooth. Further, the USB selector 1708 results in the device on which the user interface 1000 is displayed, e.g., the locator 150 or the mobile device 160, searching for the external GNSS device 140 by way of devices that are connected via USB.

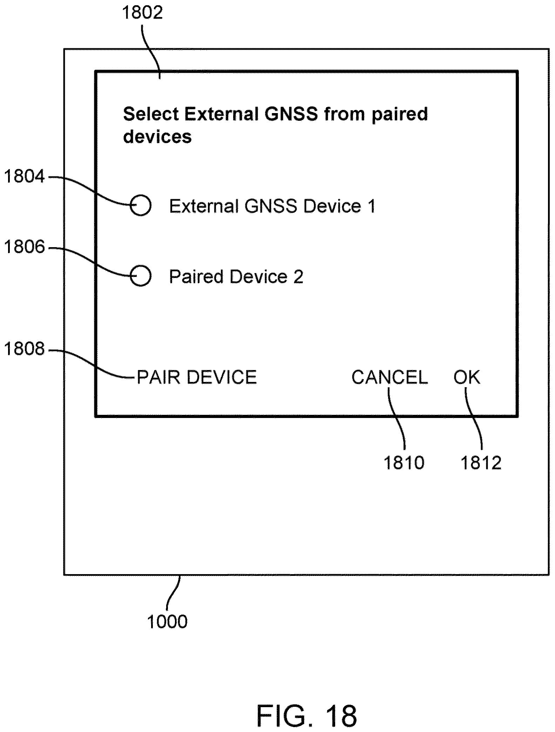

FIG. 18 is a paired device dialogue box 1802 of the user interface 1000. The paired device dialogue box 1802 includes a first paired device selector 1804, a second paired device selector 1806, a pair device button 1808, an OK button 1810, and a cancel button 1812. In some embodiments, the paired device dialogue box 1802 includes additional selectors. The selectors of the paired device dialogue box 1802 each correspond to external GNSS device(s) 140 that are currently paired with the locator 150 or the mobile device 160 on which the user interface 1000 is displayed. Additional Bluetooth devices may be paired to the underground utility asset detection equipment of FIG. 1 using the pair device button 1808, which initiates a Bluetooth pairing function. Thus, the paired device dialogue box 1802 enables selection between paired Bluetooth devices to act as the external source of GNSS geospatial location data.

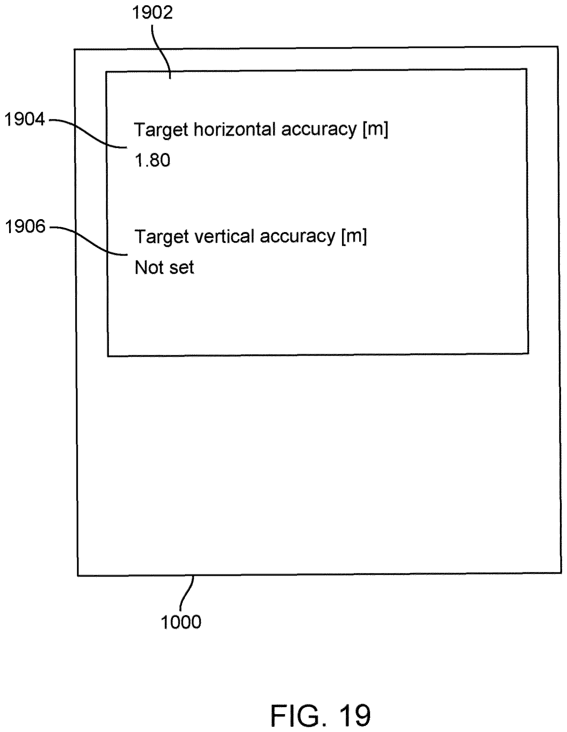

FIG. 19 is a current target dialogue box 1902 of the user interface 1000. The current target dialogue box 1902 can appear when the accuracy status icon 1006 of FIG. 10 is selected or when the settings button 1410 of FIG. 14 is selected. The current target dialogue box 1902 displays a horizontal accuracy target value 1904 and a vertical accuracy target value 1906. The horizontal accuracy target value 1904 can correspond to the horizontal accuracy threshold value, and the vertical accuracy target value 1906 can correspond to the vertical accuracy threshold value as described above with respect to the vertical and horizontal analyzer 660. Although not specifically shown, the current target dialogue box 1902 can also display values corresponding to the other accuracy threshold values described above, such as the HDOP threshold value, the VDOP threshold value, the TDOP threshold value, the PDOP threshold value, the GDOP threshold value, the number of satellites tracked threshold value, or the satellite constellations tracked threshold value.

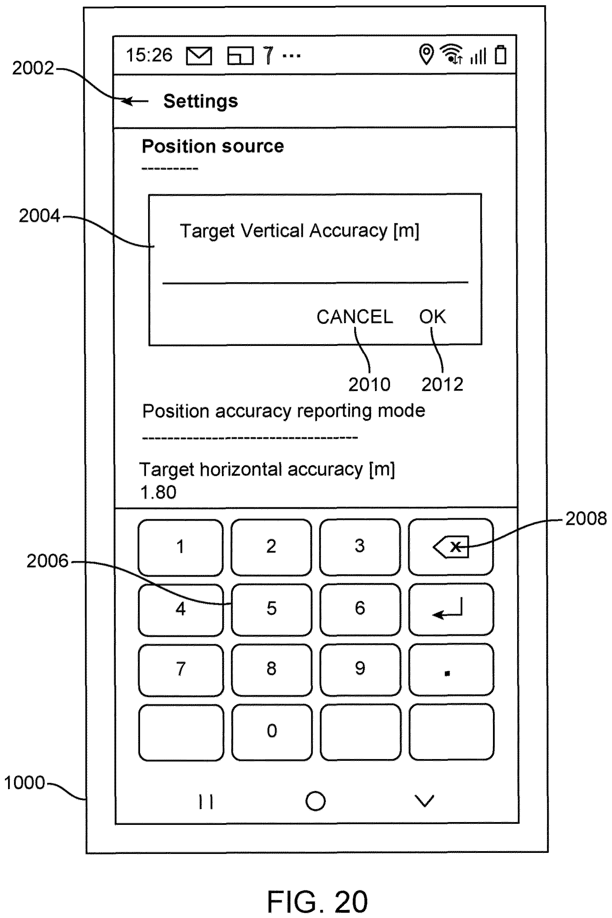

The horizontal accuracy target value 1904 and the vertical accuracy target value 1906 can be input by the user when the current target dialogue box 1902 is selected, which opens a target accuracy input dialogue box 2002 of the user interface 1000 as illustrated in FIG. 20. The target accuracy input dialogue box 2002 includes an input box 2004, a numeric keypad 2006, a clear button 2008, a cancel button 2010, and an OK button 2012. Accordingly, the horizontal accuracy target value 1904 and the vertical accuracy target value 1906 of FIG. 19 are entered or modified via the target accuracy input dialogue box 2002. Although not specifically shown, it is to be understood that the target accuracy input dialogue box 2002 can also allow the user to input values corresponding to the other accuracy threshold values described above, such as the HDOP threshold value, the VDOP threshold value, the TDOP threshold value, the PDOP threshold value, the GDOP threshold value, the number of satellites tracked threshold value, and the satellite constellations tracked threshold value. It should be understood that all of the threshold or target values described above can be stored as part of the accuracy requirements storage 502 in one or more of the memories 402a, 402b, 402c.

Specific embodiments of improved underground utility asset detection equipment according to the present invention have been described for the purpose of illustrating the manner in which the invention can be made and used. It should be understood that the implementation of other variations and modifications of this invention and its different aspects will be apparent to one skilled in the art and that this invention is not limited by the specific embodiments described. Features described in one embodiment can be implemented in other embodiments. The subject disclosure is understood to encompass the present invention and any and all modifications, variations, or equivalents that fall within the spirit and scope of the basic underlying principles disclosed and claimed herein.

## Claims

1. An underground utility asset detection system, the system comprising:
a locator configured to detect underground signals;
a GNSS receiver; and
a mobile device in communication with the locator and the GNSS receiver, the mobile device including a processor configured to:
receive a set of geospatial location data from the GNSS receiver,
receive one or more accuracy values associated with the set of geospatial location data,
access one or more user-selectable threshold values, and
compare the one or more accuracy values to the one or more user-selectable threshold values to determine an accuracy score,
wherein the mobile device is configured to display one or more of an accuracy status icon or a GNSS status icon having a visual indicator that corresponds to the accuracy score.

2. The system of claim 1, wherein the one or more accuracy values include one or more of a dilution of precision (DOP) value, a number of satellites tracked by the GNSS receiver, a horizontal accuracy value, a vertical accuracy value, and a speed value.

3. The system of claim 2, wherein the one or more user-selectable threshold values includes one or more of a DOP threshold value, a number of satellites tracked threshold value, a horizontal accuracy threshold value, a vertical accuracy threshold value, and a speed threshold value.

4. The system of claim 3, wherein the DOP threshold value includes one or more of a horizontal DOP threshold value, a vertical DOP threshold value, a time DOP threshold value, a positional DOP threshold value, and a geometric DOP threshold value.

5. The system of any one of claim 1 to 4, wherein the mobile device is configured to store the set of geospatial location data in a memory of the mobile device along with an underground measurement taken by the locator only when one or more of the user-selectable threshold values are satisfied by the one or more accuracy values.

6. The system of any one of claim 1 to 5, wherein the one or more user-selectable threshold values are input by a user via a user interface, and the user interface is one of a locator display on the locator or a mobile device display on the mobile device.

7. The system of any one of claim 1 to 5, wherein a user can select, via a user interface of the mobile device, the GNSS receiver as being one of an external GNSS receiver, a locator GNSS receiver within the locator, or a mobile device GNSS receiver within the mobile device.

8. The system of claim 6 or 7, wherein the user interface displays the accuracy status icon or the GNSS status icon in a predetermined color when all of the one or more user-selectable threshold values are satisfied.

9. The system of claim 6 or 7, wherein the user interface of the displays a predetermined pattern or an animation when all of the one or more user-selectable threshold values are satisfied.

10. The system of claim 6 or 7, wherein the user interface displays a predetermined color when none of the one or more user-selectable threshold values are satisfied.

11. The system of any one of claim 2 to 10, wherein the accuracy status icon displays one or more of the DOP value, a number of satellites tracked, a satellite constellations tracked value, a vertical accuracy value, or a horizontal accuracy value.

12. The system of any one of claim 1 to 11, wherein the mobile device is configured to provide one or more of a tactile vibration or an audible warning based on the accuracy score.

13. The system of any one of claim 1 to 12, wherein the mobile device and the GNSS receiver are integrally formed with the locator.

14. The system of any one of claim 1 to 13, wherein the processor receives an underground measurement point, and stores the accuracy score, the underground measurement point, and the set of geospatial location data as a survey data set.

15. The system of any one of claim 1 to 14, wherein the processor automatically disposes the set of geospatial location data when one or more of the accuracy values do not satisfy the one or more user-selectable threshold values.
